# EUROPÄISCHE PATENTSCHRIFT

(11) **EP 4 204 291 B1**
(45) Veröffentlichungstag und Bekanntmachung des Hinweises auf die Patenterteilung: **08.10.2025**
(21) Anmeldenummer: 21766436.6
(22) Anmeldetag: 19.08.2021
(51) Int. Cl.: B62K 19/30, B62M 6/40, B62K 19/34, B62M 6/55

(54) **BEFESTIGUNGSANORDNUNG, INSBESONDERE ZUR BEFESTIGUNG EINES ELEKTRISCHEN ANTRIEBS AN EINEM ELEKTROFAHRRAD**
ATTACHMENT ARRANGEMENT, IN PARTICULAR FOR ATTACHING AN ELECTRIC DRIVE TO AN ELECTRIC BICYCLE
DISPOSITIF DE FIXATION, EN PARTICULIER POUR LA FIXATION D'UN ENTRAÎNEMENT ÉLECTRIQUE À UNE BICYCLETTE ÉLECTRIQUE

(30) Priorität: 28.08.2020 DE 102020210864
(43) Veröffentlichungstag der Anmeldung: 05.07.2023
(73) Patentinhaber: Robert Bosch GmbH, 70442 Stuttgart (DE)
(72) Erfinder: NIEBEL, Peter, 72127 Kusterdingen-Maehringen (DE); DOELLING, Rolando, 72379 Hechingen (DE); HAEUSSERMANN, Conrad, 72818 Trochtelfingen (DE); HOLST, Stefan, 72760 Reutlingen (DE); SCHIPPERGES, Jannis-Jeremias, 72764 Reutlingen (DE); DIKMENLI, Erdogan, 71636 Ludwigsburg (DE); HUNDT, Harald, 73101 Aichelberg (DE); FLEISCHER, Claus, 70569 Stuttgart-Vaihingen (DE); YALCIN, Mehmet, 71696 Moeglingen (DE); BRAUN, Sigmund, 72127 Kusterdingen (DE)
(86) Internationale Anmeldenummer: PCT/EP2021/073046
(87) Internationale Veröffentlichungsnummer: WO 2022/043182

(56) Entgegenhaltungen:
- DE-A1- 102016 112 778
- DE-A1- 102016 115 681
- DE-A1- 102017 201 617
- DE-A1- 102017 214 190
- US-B2- 10 300 985
- US-B2- 9 904 073

## Beschreibung

### Stand der Technik

Die vorliegende Erfindung betrifft eine Befestigungsanordnung, welche eingerichtet ist, eine Befestigung eines Antriebs an einem Rahmenbauteil eines Fahrrads, mit zwei einander gegenüberliegenden Löchern zu ermöglichen. Ferner betrifft die vorliegende Erfindung ein Elektrofahrrad mit einer derartigen Befestigungsanordnung zum Fixieren des elektrischen Antriebs an einem Rahmenbauteil des Elektrofahrrads. Derartige Befestigungsanordnungen sind beispielsweise aus DE 10 2016 112778 A1, US 10 300 985 B2, DE 10 2017 201617 A1, US 9 904 073 B2 und DE 10 2017 214190 A1 bekannt. Das Dokument US 10 300 985 B2 offenbart die Merkmalen der Präambel des Anspruchs 1.

Bei der Befestigung von Bauteilen mittels Befestigungsanordnungen sind häufig unterschiedliche Aspekte, welche sich gegebenenfalls widersprechen, zu beachten. Insbesondere bei einer Montage eines elektrischen Antriebs an einem Fahrradrahmen ergeben sich spezielle Anforderungen. Einmal muss eine mechanische Stabilität über die gesamte Lebensdauer durch die Befestigungsanordnung erreicht werden. Ferner muss ein Toleranzausgleich zwischen den mechanischen Schnittstellen des elektrischen Antriebs und dem hohlen Rahmen bzw. einer offenen Halterung oder dgl. ermöglicht werden. Zur Befestigung elektrischer Antriebe an einem Fahrradrahmen werden üblicherweise durchgehende Schrauben verwendet, welche durch zwei einander gegenüberliegenden Löchern hindurchgeführt sind. Ein Toleranzausgleich erfolgt hierbei durch eine elastische Verformung im Bereich der Schnittstelle zwischen der durchgehenden Schraube und dem Rahmen. Dies führt jedoch zu einem Einbringen von mechanischen Spannungen in das System. Ein weiterer Problemkreis liegt darin, dass der Rahmen als hohles Bauteil einen Resonanzkörper bildet, so dass Geräusche, welche durch den elektrischen Antrieb im Betrieb erzeugt werden, durch den hohlen Rahmen verstärkt werden oder zu Vibrationen am Elektrofahrrad führen. Von daher wäre es wünschenswert, eine verbesserte Befestigung einer Vorrichtung an einem hohlen Bauteil, insbesondere eines elektrischen Antriebes an einem Fahrradrahmen oder dgl. zu realisieren.

### Offenbarung der Erfindung

Die erfindungsgemäße Befestigungsanordnung mit den Merkmalen des Anspruchs 1 weist demgegenüber den Vorteil auf, dass einerseits eine hohe mechanische Stabilität über eine Lebensdauer der zu befestigenden Bauteile erreicht wird und auch ein Toleranzausgleich an einer mechanischen Schnittstelle zwischen der zu befestigenden Vorrichtung und dem hohlen Bauteil möglich ist. Weiterhin weist die erfindungsgemäße Befestigungsanordnung nur einen geringen Platzbedarf auf und ermöglicht ferner auch eine Geräuschreduktion, wenn die zu befestigende Vorrichtung im Betrieb Geräusche erzeugt, welche durch das hohle Bauteil als Resonanzkörper verstärkt werden könnten. Dies wird erfindungsgemäß dadurch erreicht, dass die Befestigungsanordnung zur Befestigung einer Vorrichtung an einem hohlen Bauteil mit zwei einander gegenüberliegenden Löchern eine erste Schraube mit einem Kopf und eine Schiebehülse aufweist. Die erste Schraube mit Kopf ist eingerichtet, zumindest durch ein erstes der beiden Löcher hindurchgeführt zu werden. Die Schiebehülse ist eingerichtet, die erste Schraube aufzunehmen, zum Beispiel im zweiten der beiden Löcher, wobei die Schiebehülse relativ verschiebbar zum hohlen Bauteil und/oder der zu befestigenden Vorrichtung ist. Durch die Schiebehülse kann somit ein Toleranzausgleich auf einfache und sichere Weise realisiert werden. Die Schiebehülse kann zur Befestigung der ersten Schraube verwendet werden oder alternativ auch als Zwischenbauteil für ein Gegenelement zur ersten Schraube, beispielsweise eine zweite Schraube oder eine Mutter oder dgl., verwendet werden.

Die Befestigungsanordnung umfasst erfindungsgemäß eine erste Schraube mit einem Kopf, welche eingerichtet ist, durch das erste der Löcher im hohlen Bauteil hindurchgeführt zu werden. Ferner ist die Schiebehülse mit toleranzbehaftetem Außendurchmesser vorgesehen, welche eingerichtet ist, am anderen der Löcher die erste Schraube aufzunehmen. Dabei ist ein Außendurchmesser der Schiebehülse derart gewählt, dass eine Spielpassung mit dem anderen Loch, in welchem die erste Schraube nicht angeordnet ist, vorhanden ist. Die Spielpassung ermöglicht einen einfachen und sicheren Toleranzausgleich unter Einhaltung der notwendigen mechanischen Stabilität der Befestigungsanordnung. Weiterhin ist durch die Schiebehülse eine Möglichkeit zur Geräuschreduktion gegeben, falls die zu befestigende Vorrichtung im Betrieb Geräusche erzeugt, was beispielsweise bei einem elektrischen Antrieb eines Fahrrads möglich ist.

Die Unteransprüche zeigen bevorzugte Weiterbildungen der Erfindung.

Vorzugsweise weist die Schiebehülse ein Innengewinde zur Aufnahme der ersten Schraube auf und die erste Schraube weist vorzugsweise ein Außengewinde auf, welches mit dem Innengewinde der Schiebehülse in Eingriff bringbar ist. Hierdurch kann eine minimale Teileanzahl und insbesondere ein geringer Platzbedarf und ein geringes Gewicht der Befestigungsanordnung realisiert werden.

Weiter bevorzugt umfasst die Befestigungsanordnung ferner eine zweite Schraube, welche vorzugsweise direkt oder alternativ indirekt mit der ersten Schraube verbunden ist. Vorzugsweise weist die erste Schraube ein Sackloch mit einem Innengewinde auf, welches eingerichtet ist, die zweite Schraube, die ein Außengewinde aufweist, aufzunehmen. Alternativ weist die zweite Schraube ein Sackloch mit Innengewinde auf, welches eingerichtet ist, die erste Schraube mit einem entsprechend gebildeten Außengewinde aufzunehmen. Statt eines Sacklochs kann auch ein durchgehendes Loch vorgesehen sein.

Besonders bevorzugt ist die Ausgestaltung der ersten Schraube derart, dass diese länger als die zweite Schraube ist. Hierbei ist die erste Schraube besonders bevorzugt derart ausgebildet, dass die erste Schraube eine Länge aufweist, welche sowohl durch das erste als auch das zweite der Löcher im hohlen Bauteil reicht.

Weiter bevorzugt weist die Schiebehülse einen Hauptkörper und einen Innenflansch auf. Hierbei sind der Hauptkörper und der Innenflansch aus zwei unterschiedlichen Materialien hergestellt. Der Hauptkörper definiert dabei den Außendurchmesser der Schiebehülse, insbesondere mit Spielpassung. Der Innenflansch ist aus einem härteren Material als der Hauptkörper ausgebildet.

Der Innenflansch ist vorzugsweise aus einem Metallmaterial hergestellt und der Hauptkörper aus einem Kunststoffmaterial.

Weiter bevorzugt weist die Schiebehülse ferner einen Außenflansch auf. Der Außenflansch ist vorzugsweise aus dem gleichen Material wie der Innenflansch hergestellt. Besonders bevorzugt sind der Innenflansch und der Außenflansch als Lochscheiben oder Unterlegscheiben hergestellt. Dabei ist der Hauptkörper zwischen dem Innenflansch und dem Außenflansch angeordnet. Der Innenflansch weist vorzugsweise einen größeren Außendurchmesser als der Hauptkörper auf. Der Außenflansch weist vorzugsweise einen kleineren Durchmesser als der Hauptkörper auf. Der Außenflansch und der Innenflansch können mit dem Hauptkörper fest verbunden werden oder alternativ sind der Außenflansch und der Innenflansch nur lose an den Hauptkörper angelegt. Bei der Montage der Befestigungsanordnung werden der Außenflansch und der Innenflansch dabei gegen die Stirnseiten des hohlzylindrischen Hauptkörpers gedrückt und dieser elastisch verformt, um den Toleranzausgleich und die Fixierung auszuführen.

Weiter bevorzugt umfasst die Befestigungsanordnung eine erste Buchse und eine zweite Buchse, wobei die erste Schraube durch die erste und zweite Buchse hindurchgeführt ist.

Die erste Buchse weist vorzugsweise eine Innenbuchse und eine Außenbuchse auf, wobei die Innenbuchse und die Außenbuchse aus unterschiedlichen Materialien hergestellt sind. Die Innenbuchse ist vorzugsweise aus einem härteren Material als die Außenbuchse hergestellt. In gleicher Weise weist die zweite Buchse eine Innenbuchse und eine Außenbuchse auf, welche vorzugsweise mit unterschiedlichen Materialen hergestellt sind. Weiter bevorzugt weist bei der zweiten Buchse die Innenbuchse ein Innengewinde auf, welches eingerichtet ist, mit einem Außengewinde der ersten Schraube in Eingriff zu kommen.

Besonders bevorzugt weisen die erste Buchse und die zweite Buchse jeweils einen nach außen gerichteten Flansch auf. Der nach außen gerichtete Flansch ist besonders bevorzugt sowohl bei der Innenbuchse als auch der Außenbuchse vorgesehen.

Das Material der Innenbuchse der ersten und zweiten Buchse ist vorzugsweise ein hartelastischer Werkstoff, insbesondere Metall. Das Material der Außenbuchse der ersten und zweiten Buchse ist vorzugsweise ein weichelastischer Werkstoff, insbesondere ein Kunststoff.

Gemäß einer weiteren bevorzugten Ausgestaltung der vorliegenden Erfindung umfasst die Befestigungsanordnung ferner ein erstes und/oder zweites Zwischenelement aus einem Stahldrahtgestrick, wobei jedes der Zwischenelemente eine mittige Öffnung aufweist. Die Zwischenelemente sind vorzugsweise buchsenartig ausgebildet, wobei die erste Schraube und/oder die zweite Schraube durch die mittige Öffnung der Zwischenelemente hindurchgeführt ist.

Ferner betrifft die Erfindung ein Elektrofahrrad mit einer erfindungsgemäßen Befestigungsanordnung.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht einer Befestigungsanordnung eines elektrischen Antriebs an einem Fahrradrahmen gemäß einem ersten Ausführungsbeispiel der Erfindung,
- Figur 2: eine schematische Schnittansicht einer Befestigungsanordnung eines elektrischen Antriebs an einem Fahrradrahmen gemäß einem zweiten Ausführungsbeispiel der Erfindung,
- Figur 3: eine schematische Schnittansicht einer Befestigungsanordnung eines elektrischen Antriebs an einem Fahrradrahmen gemäß einem dritten Ausführungsbeispiel der Erfindung,
- Figur 4: eine schematische, perspektivische Ansicht eines Elements aus Stahldrahtgestrick von Figur 3,
- Figur 5: eine schematische Schnittansicht einer Befestigungsanordnung eines elektrischen Antriebs an einem Fahrradrahmen gemäß einem vierten Ausführungsbeispiel der Erfindung, und
- Figur 6: eine schematische Schnittansicht einer Befestigungsanordnung eines elektrischen Antriebs an einem Fahrradrahmen gemäß einem fünften Ausführungsbeispiel der Erfindung.

### Bevorzugte Ausführungsformen der Erfindung

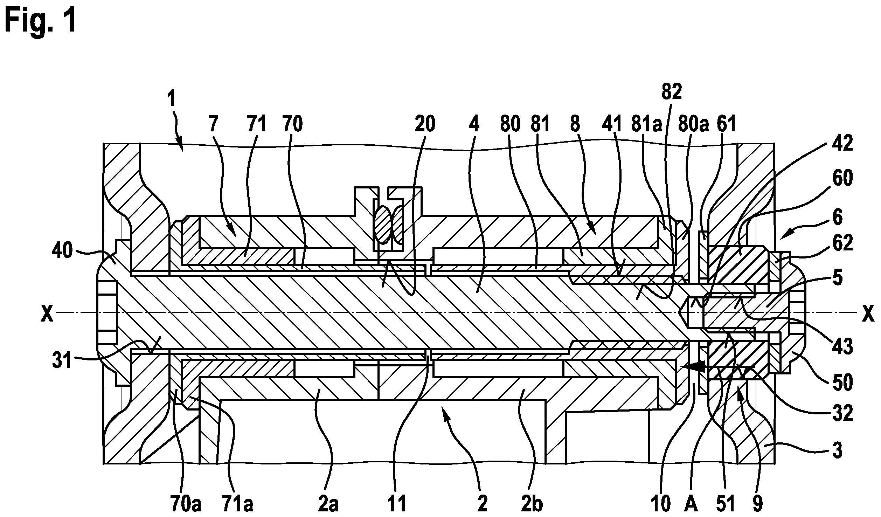

Nachfolgend wird unter Bezugnahme auf Figur 1 eine Befestigungsanordnung 1 gemäß einem ersten bevorzugten Ausführungsbeispiel der Erfindung im Detail beschrieben.

Die Befestigungsanordnung 1 ist eingerichtet zur Befestigung einer Vorrichtung 2, in diesem Ausführungsbeispiel eines elektrischen Antriebes eines Fahrrads mit mehrteiligem Gehäuse 2a, 2b, an einem hohlen Bauteil 3, in diesem Ausführungsbeispiel ein Rahmenbauteil des Fahrrads.

Wie aus Figur 1 ersichtlich ist, umfasst das hohle Bauteil 3 ein erstes Loch 31 und ein zweites Loch 32. Die beiden Löcher sind am hohlen Bauteil einander gegenüberliegend angeordnet. Zwischen den beiden Löchern ist die Vorrichtung 2 angeordnet, welche eine Durchgangsöffnung 20 aufweist. Die Befestigungsanordnung 1 ist dabei durch die Durchgangsöffnung 20 in der Vorrichtung 2 hindurchgeführt. Die Befestigungsanordnung 1 umfasst eine erste Schraube 4 mit Kopf 40 und eine Schiebehülse 6. Die Schiebehülse 6 ist eingerichtet, die erste Schraube 4 aufzunehmen, insbesondere im zweiten Loch 32, wobei die Schiebehülse 6 relativ verschiebbar zum hohlen Bauteil 3 und zur Vorrichtung 2 ist.

Die Schiebehülse 6 umfasst einen hohlzylindrischen Hauptkörper 60, einen Innenflansch 61 und einen Außenflansch 62. Der Innenflansch 61 weist einen größeren Außendurchmesser als einen Außendurchmesser des Hauptkörpers 60 auf. Der Außenflansch 62 weist einen kleineren Außendurchmesser als der Außendurchmesser des Hauptkörpers 60 auf. Die Schiebehülse 6 ist aus zwei unterschiedlichen Materialien hergestellt. Dabei ist der Hauptkörper 60 aus einem weichflexiblen Material, beispielsweise Kunststoff, hergestellt. Insbesondere ist der Hauptkörper 60 elastisch verformbar. Der Innenflansch 61 und der Außenflansch 62 sind aus einem hartelastischen Material, beispielsweise Metall, hergestellt. In diesem Ausführungsbeispiel sind der Innenflansch 61 und der Außenflansch 62 als Lochscheiben vorgesehen. Dabei sind der Innenflansch 61 und der Außenflansch 62 nur jeweils an die stirnseitigen Endbereiche des Hauptkörpers 60 angelegt.

Der Hauptkörper 60 definiert mit seinem Außendurchmesser eine Spielpassung 9 zum zweiten Loch 32 des hohlen Bauteils 3. Dadurch ist eine Verschiebung der Schiebehülse 6 in Axialrichtung X-X der ersten Schraube 4 möglich.

Die Befestigungsanordnung 1 umfasst ferner eine zweite Schraube 5 sowie eine erste Buchse 7 und eine zweite Buchse 8.

Die zweite Schraube 5 weist einen Kopf 50 und einen Körper mit einem Außengewinde 51 auf. Wie aus Figur 1 deutlich ist, ist eine Länge in Axialrichtung X-X der zweiten Schraube 5 kürzer als eine Länge der ersten Schraube 4. Dabei ist die zweite Schraube 5 deutlich kürzer als die erste Schraube 4. Die erste Schraube 4 weist eine Länge auf, so dass sie sowohl durch das erste Loch 31 als auch das zweite Loch 32 hindurchgeführt ist. Ferner weist die erste Schraube 4 ein Sackloch 42 mit einem Innengewinde 43 auf. Die zweite Schraube 5 ist mit ihrem Außengewinde 51 in das Innengewinde 43 der ersten Schraube 4 eingeschraubt. Dabei ist der Bereich der ersten Schraube 4, in welchem das Sackloch 42 ausgebildet ist, teilweise im Inneren der Schiebehülse 6 angeordnet.

Die erste Buchse 7 umfasst eine Innenbuchse 70 und eine Außenbuchse 71. Die Innenbuchse 70 und die Außenbuchse 71 sind aus unterschiedlichen Materialien hergestellt. Die Innenbuchse 70 ist vorzugsweise aus einem Metallmaterial hergestellt und die Außenbuchse 71 aus einem Kunststoffmaterial. Dabei weisen sowohl die Innenbuchse als auch die Außenbuchse jeweils einen nach außen gerichteten Flansch 70a bzw. 71a auf (vgl. Figur 1). Die zweite Buchse weist einen ähnlichen Aufbau wie die erste Buchse 7 auf mit einer Innenbuchse 80 und einer Außenbuchse 81. Dabei weist die Innenbuchse 80 einen nach außen gerichteten Flansch 80a und die Außenbuchse 81 einen nach außen gerichteten Flansch 81a auf. Ferner weist die zweite Buchse 8 an der Innenbuchse 80 ein Innengewinde 82 auf.

Wie aus Figur 1 ersichtlich ist, weist die erste Schraube 4 neben dem Innengewinde 43 im Sackloch 42 zusätzlich noch ein Außengewinde 41 auf. Das Außengewinde 41 befindet sich mit dem Innengewinde 82 der zweiten Buchse 8 im Eingriff.

Figur 1 zeigt dabei einen Zustand der Befestigungsanordnung 1, in welchem die Befestigungsanordnung 1 sich erst in einem vormontierten Zustand befindet. Hierbei ist noch ein Spalt 10 zwischen der zweiten Buchse 8 und der Schiebehülse 6 vorhanden (vgl. Figur 1). Im vollständig montierten Zustand wird die zweite Schraube 5 vollständig in das Sackloch 42 der ersten Schraube 4 eingeschraubt, wobei sich die Schiebehülse 6 in Richtung des Pfeils A in Richtung zur zweiten Buchse 8 bewegt. Dadurch wird der Spalt 10 geschlossen. Sobald ein Kontakt zwischen der Schiebehülse 6 im Bereich des Innenflansches 61 mit der zweiten Buchse 8 im Bereich des Flansches 80a vorhanden ist, beginnt eine elastische Verformung des Hauptkörpers 60 der Schiebehülse 6 bis zur endgültigen Fixierung. Somit kann durch die Schiebehülse 6 ein Toleranzausgleich auf einfache und effektive Weise bereitgestellt werden.

Somit ermöglicht die Befestigungsanordnung 1 eine zweistufige Verschraubung, wobei zusätzlich durch den Hauptkörper 60 der Schiebehülse 6 eine akustische Dämmung des strukturmechanischen Transferpfades des elektrischen Antriebs auf den hohlen Rahmen ermöglicht wird. Die Montage der Befestigungsanordnung 1 bringt dabei keine nennenswerten Spannungen in das Gesamtsystem ein und unterbricht insbesondere einen akustischen Transferpfad von der Vorrichtung 2 zum hohlen Bauteil 3.

Weiterhin bilden die erste Buchse 7 und die zweite Buchse 8 durch ihre jeweiligen Innenbuchsen 70, 80 einen Anschlag, über welchen eine notwendige Verspannung der Befestigungsanordnung abgeleitet wird. Figur 1 zeigt dabei noch den Zustand, in welchem ein kleiner zweiter Spalt 11 zwischen den Innenbuchsen 70 und 80 vorhanden ist. Durch die lange erste Schraube 4 wird ferner die Vorrichtung 2 an der in Figur 1 linken Seite fixiert. Somit ist die erste Verschraubung zwischen der ersten Schraube 4 und der zweiten Buchse 8 bereitgestellt und die zweite Verschraubung ist zwischen der ersten Schraube 4 und der zweiten Schraube 5 realisiert. Beim Schraubvorgang der zweiten Schraube 5 wird somit die Schiebehülse 6 infolge der Spielpassung 9 bis auf Anschlag gegen den Flansch 80a in Axialrichtung X-X verschoben, bis der Spalt 10 geschlossen ist. Somit kann ein Toleranzausgleich zwischen der Vorrichtung 2 und dem hohlen Bauteil 3 ermöglicht werden. Ein weiterer Toleranzausgleich wird durch Verformung der beiden Außenbuchsen 71, 81 und Schließen des zweiten Spalts 11 ermöglicht. Bei weiterem Einschrauben der zweiten Schraube 5 in die erste Schraube 4 wird dann wie oben beschrieben der Hauptkörper 60 elastisch deformiert, so dass der Hauptkörper 60 im zweiten Loch 32 derart geweitet wird, dass sich der Hauptkörper 60 dauerhaft fest im zweiten Loch 32 verspannt. Damit ist auch die zweite Seite der Befestigungsanordnung 1 am Rahmen fest verankert und eine sichere Befestigung des elektrischen Antriebs am Rahmen ermöglicht.

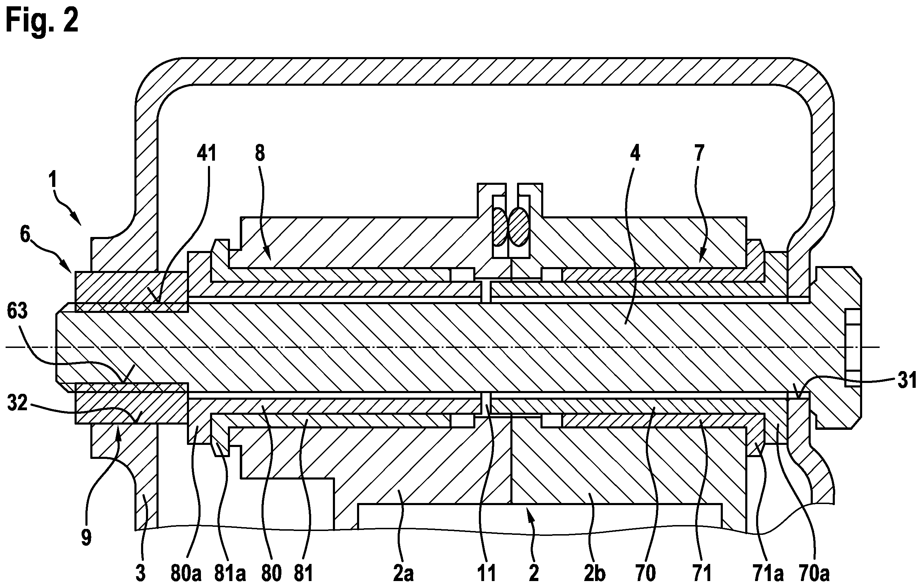

Figur 2 zeigt eine Befestigungsanordnung 1 gemäß einem zweiten Ausführungsbeispiel der Erfindung. Gleiche bzw. funktional gleiche Teile sind mit den gleichen Bezugszeichen bezeichnet.

Im Unterschied zum ersten Ausführungsbeispiel weist die Befestigungsanordnung 1 des zweiten Ausführungsbeispiels eine Schiebehülse 6 auf, welche ein Innengewinde 63 aufweist. Die erste Schraube 4 weist ein Außengewinde 41 auf. Das Außengewinde 41 befindet sich mit dem Innengewinde 63 der Schiebehülse 6 im Eingriff. Ferner sind eine erste Buchse 7 und eine zweite Buchse 8 vorgesehen, wobei die zweite Buchse 8 des zweiten Ausführungsbeispiels kein Innengewinde aufweist. Die erste und zweite Buchse 7 und 8 weisen jeweils eine Innenbuchse 70, 80 und eine Außenbuchse 71, 81 auf. Eine axiale Länge der ersten und zweiten Buchse 7, 8 ist dabei unterschiedlich.

Zwischen der Schiebehülse 6 und dem zweiten Loch 32 ist wieder eine Spielpassung 9 ausgebildet. Dadurch kann ein Toleranzausgleich ermöglicht werden. Alternativ kann auch eine Übergangspassung zwischen der Schiebehülse 6 und dem zweiten Loch 32 vorgesehen sein. Beim Anziehen der ersten Schraube 4 wird die Schiebehülse 6 somit in Axialrichtung in Richtung zur Vorrichtung 2 verschoben, bis die Schiebehülse 6 den Flansch 80a der zweiten Buchse 8 kontaktiert. Ab dem Zeitpunkt der Berührung wird dann eine Vorspannkraft für die Befestigung der Vorrichtung 2 am hohlen Bauteil 3 aufgebaut.

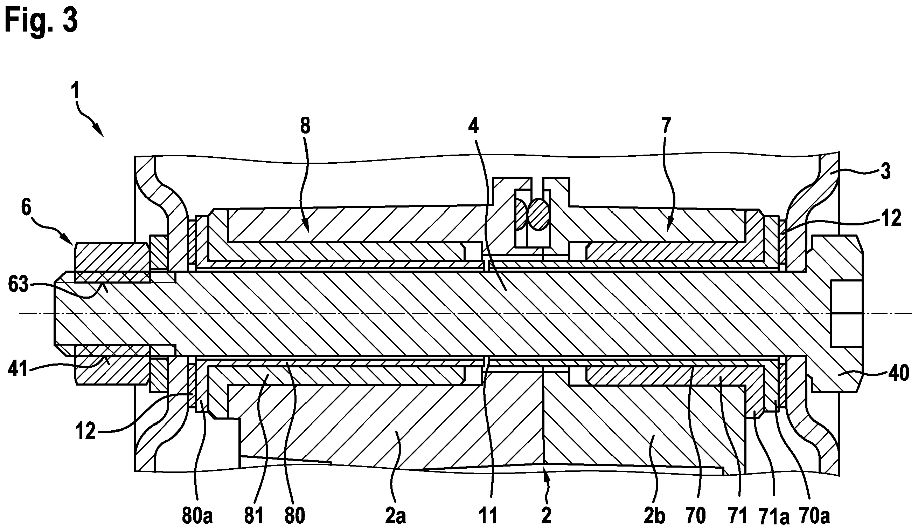

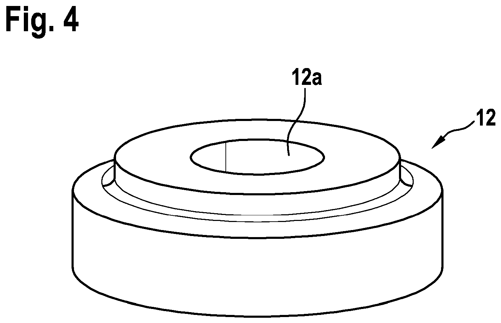

Die Figuren 3 und 4 zeigen eine Befestigungsanordnung 1 gemäß einem dritten Ausführungsbeispiel der Erfindung. Gleiche bzw. funktional gleiche Teile sind mit den gleichen Bezugszeichen wie in den vorhergehenden Ausführungsbeispielen bezeichnet.

Das dritte Ausführungsbeispiel weist zusätzlich noch Dämpfungselemente 12 auf, welche zwischen der Vorrichtung 2 und dem hohlen Bauteil 3 angeordnet sind. Genauer sind die Dämpfungselemente 12, wie aus Figur 4 ersichtlich, scheibenartige Bauteile mit einer mittigen Öffnung 12a, welche links und rechts an den Innenseiten des Fahrradrahmens angeordnet sind. Somit sind die Dämpfungselemente 12 zwischen der ersten Buchse 7 und dem Fahrradrahmen bzw. der zweiten Buchse 8 und dem Fahrradrahmen angeordnet. Die Dämpfungselemente 12 sind aus einem Stahldrahtgestrick hergestellt. Ein Maß einer Dämpfung sowie eine Steifigkeit des Dämpfungselements 12 kann über das Gestrick und einen vorbestimmten Pressgrad gezielt eingestellt werden. Durch Verwendung der gestrickten Dämpfungselemente 12 ist somit auch eine thermische und auch eine elektrische Anbindung realisierbar. Das Dämpfungselement 12 dient insbesondere zur Schwingungsdämpfung sowie zur Reduktion von übertragenen Geräuschen von der Vorrichtung 2 auf das hohle Bauteil 3. Somit kann insbesondere eine Entkopplung des Fahrradrahmens vom elektrischen Antrieb des Fahrrads ermöglicht werden. Als Metall wird vorzugsweise CrNi oder eine entsprechende Legierung verwendet. Dies hat den Vorteil einer hohen Lebensdauer sowie einer hohen Belastbarkeit. Weiterhin ist dieses Material Alterungsbeständigkeit, so dass kein Kriechen und kein Verhärten auftritt. Ansonsten entspricht dieses Ausführungsbeispiel dem vorhergehenden Ausführungsbeispiel, so dass auf die dort gegebene Beschreibung verwiesen werden kann.

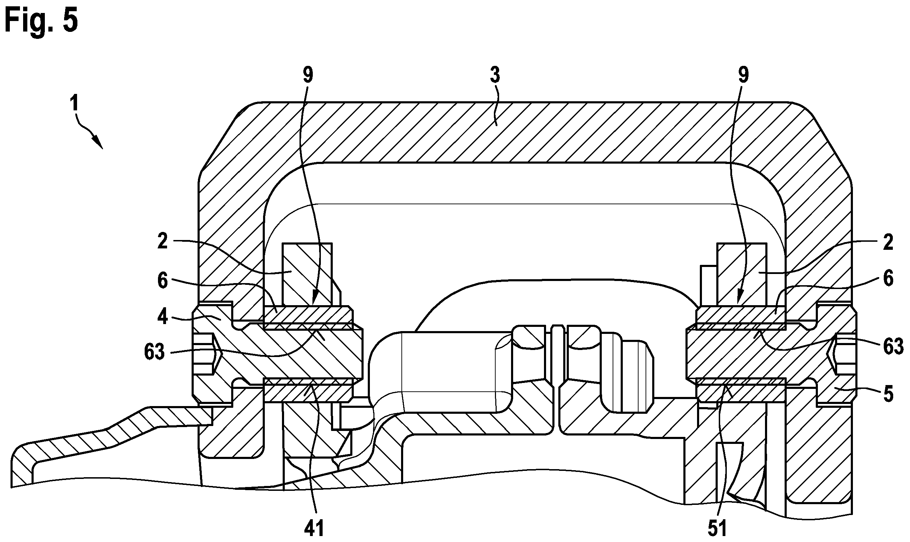

Figur 5 zeigt eine Befestigungsvorrichtung 1 gemäß einem vierten Ausführungsbeispiel der Erfindung. Gleiche bzw. funktional gleiche Teile sind wieder mit den gleichen Bezugszeichen wie in den vorhergehenden Ausführungsbeispielen bezeichnet.

Im vierten Ausführungsbeispiel ist die Schiebehülse 6 nicht mehr im hohlen Bauteil 3, sondern in der Vorrichtung 2 angeordnet. Wie aus Figur 5 ersichtlich ist, sind dabei zwei Schiebehülsen 6 vorgesehen. Weiterhin weisen die Schiebehülsen 6 jeweils ein Innengewinde 63 auf. Die Innengewinde 63 befinden sich dabei jeweils im Eingriff mit dem Außengewinde 41 der ersten Schraube 4 bzw. dem Außengewinde 51 der zweiten Schraube 5. Die Schiebehülsen 6 können dabei Toleranzen zwischen dem hohlen Bauteil 3 und der Vorrichtung 2 ausgleichen. Die Schiebehülsen 6 sind dabei jeweils mittels einer Spielpassung 9 in der Vorrichtung 2 angeordnet. Vorzugsweise wird dabei ein Schmierfett in die Aufnahmeöffnung der Vorrichtung 2 eingebracht, um eine Spaltkorrosion zu verhindern. Somit kann ein Toleranzausgleich bei einer sehr einfach aufgebauten Befestigungsanordnung 1 ermöglicht werden.

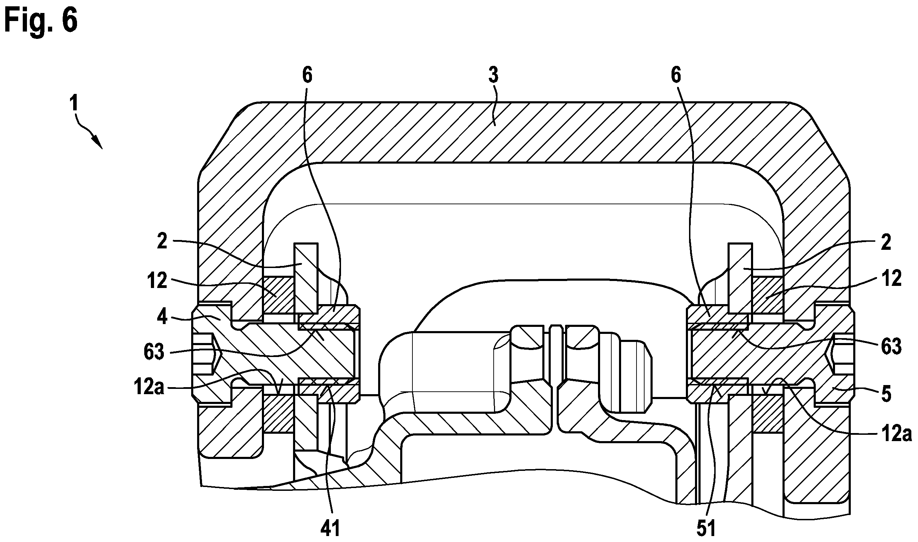

Figur 6 zeigt eine Befestigungsanordnung 1 gemäß einem fünften Ausführungsbeispiel der Erfindung. Gleiche bzw. funktional gleiche Teile sind mit den gleichen Bezugszeichen wie in den vorhergehenden Ausführungsbeispielen bezeichnet. Das fünfte Ausführungsbeispiel weist ähnlich wie das dritte Ausführungsbeispiel Dämpfungselemente 12 aus einem Stahldrahtgestrick auf, wie in Figur 4 dargestellt. Die Dämpfungselemente 12 ermöglichen eine akustische Entkopplung der Vorrichtung 2 vom hohlen Bauteil 3. Zwei Schiebehülsen 6 sind wie im vierten Ausführungsbeispiel in der Vorrichtung 2 in entsprechenden Bohrungen oder dgl. angeordnet. Die erste Schraube 4 bzw. die zweite Schraube 5 sind jeweils in eine der Schiebehülse 6 in der Vorrichtung 2 wie im vierten Ausführungsbeispiel eingeschraubt. Während des Einschraubvorgangs kann wieder ein Toleranzausgleich durch axiales Verschieben der Schiebehülsen 6 ermöglicht werden. Ansonsten entspricht dieses Ausführungsbeispiel den vorhergehenden Ausführungsbeispielen, so dass auf die dort gegebene Beschreibung verwiesen werden kann.

## Patentansprüche

1. Befestigungsanordnung, eingerichtet zur Befestigung eines elektrischen Antriebs (2) eines Fahrrads an einem Rahmenbauteil (3) des Fahrrads, welches zwei einander gegenüberliegende Löcher (31, 32) aufweist, umfassend:
- eine erste Schraube (4) mit einem Kopf (40), welche eingerichtet ist, durch ein erstes Loch (31) der Löcher hindurchgeführt zu werden, und
- eine Schiebehülse (6), welche eingerichtet ist, die erste Schraube (4) aufzunehmen, wobei die Schiebehülse (6) relativ verschiebbar zum Rahmenbauteil (3) und/oder zum Antrieb (2) ist,
**dadurch gekennzeichnet, dass** die Schiebehülse (6) einen toleranzbehafteten Außendurchmesser aufweist und eingerichtet ist, die erste Schraube (4) am zweiten Loch (32) der Löcher aufzunehmen, wobei am Außendurchmesser der Schiebehülse eine Spielpassung (9) ausgebildet ist, so dass die Schiebehülse in Axialrichtung (X-X) der ersten Schraube, insbesondere im zweiten Loch (32) verschiebbar ist.

2. Befestigungsanordnung nach Anspruch 1, wobei die Schiebehülse (6) ein Innengewinde (63) zur Aufnahme der ersten Schraube (4) aufweist.

3. Befestigungsanordnung nach Anspruch 1, ferner umfassend eine zweite Schraube (5),
- wobei die erste Schraube (4) ein Sackloch (42) mit einem Innengewinde (43) aufweist und die zweite Schraube (5) ein Außengewinde (51) aufweist, welches für eine Schraubverbindung mit dem Innengewinde (43) des Sacklochs (42) eingerichtet ist, oder
- wobei die erste Schraube (4) ein Außengewinde aufweist und die zweite Schraube (5) ein Sackloch mit Innengewinde aufweist, welches eingerichtet ist, das Außengewinde der ersten Schraube (4) aufzunehmen.

4. Befestigungsanordnung nach Anspruch 3, wobei eine Länge der ersten Schraube (4) größer ist als eine Länge der zweiten Schraube (5).

5. Befestigungsanordnung nach einem der vorhergehenden Ansprüche, wobei die Schiebehülse (6) einen Hauptkörper (60) und einen Innenflansch (61) aufweist, wobei der Hauptkörper (60) aus einem anderen Material als der Innenflansch (61) hergestellt ist, und wobei der Hauptkörper (60) eine geringere Härte als der Innenflansch (61) aufweist.

6. Befestigungsanordnung nach Anspruch 5, wobei die Schiebehülse (6) ferner einen Außenflansch (62) aufweist, wobei der Außenflansch (62) vorzugsweise aus dem gleichen Material wie der Innenflansch (61) hergestellt ist.

7. Befestigungsanordnung nach Anspruch 6, wobei der Außenflansch (62) und der Innenflansch (61) als Lochscheiben ausgebildet sind, welche mit dem Hauptkörper (60) fest verbunden sind oder welche an den Hauptkörper (60) lose angelegt sind.

8. Befestigungsanordnung nach einem der Ansprüche 5 bis 7, wobei die Spielpassung (9) am Außenumfang des Hauptkörpers (60) ausgebildet ist.

9. Befestigungsanordnung nach einem der vorhergehenden Ansprüche, ferner umfassend eine erste Buchse (7) und eine zweite Buchse (8), wobei die erste Schraube (4) durch die erste Buchse (7) und die zweite Buchse (8) hindurchgeführt ist.

10. Befestigungsanordnung nach Anspruch 9, wobei die erste Buchse (7) eine Innenbuchse (70) und eine Außenbuchse (71) aufweist, und/oder
- wobei die zweite Buchse (8) eine Innenbuchse (80) und eine Außenbuchse (81) aufweist, und
- wobei die Innenbuchse (70, 80) aus einem anderen Material als die Außenbuchse (71, 81) hergestellt ist.

11. Befestigungsanordnung nach Anspruch 10, wobei eine Härte der Innenbuchse (70, 80) größer ist als eine Härte der Außenbuchse (71, 81).

12. Befestigungsanordnung nach Anspruch 10 oder 11, wobei die zweite Buchse (8) ein Innengewinde (82) aufweist und die erste Schraube (4) ein Außengewinde (41) aufweist, welches mit dem Innengewinde (82) der zweiten Buchse (8) in Eingriff ist.

13. Befestigungsanordnung nach einem der Ansprüche 9 bis 12, wobei die erste Buchse (7) und die zweite Buchse (8) jeweils an einem ihrer Enden einen nach außen gerichteten Flansch aufweisen, wobei der Flansch insbesondere durch die Innenbuchse und die Außenbuchse gebildet ist.

14. Befestigungsanordnung nach einem der vorhergehenden Ansprüche, ferner umfassend ein Dämpfungselement (12) aus einem Stahldrahtgestrick, welches eine mittige Öffnung (12a) aufweist, wobei wenigstens die erste Schraube (4) durch das Dämpfungselement (12) hindurchgeführt ist.

15. Befestigungsanordnung nach einem der vorhergehenden Ansprüche, wobei die Schiebehülse (6) im zweiten Loch (32) angeordnet ist.

16. Elektrofahrrad, umfassend einen elektrischen Antrieb (2), und ein Rahmenbauteil (3) mit zwei einander gegenüberliegenden Löchern (31, 32), umfassend eine Befestigungsanordnung nach einem der vorhergehenden Ansprüche.

## Claims

1. Fastening arrangement, designed for fastening an electric drive (2) of a bicycle to a frame component (3) of the bicycle, which frame component has two mutually opposite holes (31, 32), comprising:
- a first screw (4) with a head (40), which first screw is designed to pass through a first hole (31) of the holes, and
- a sliding sleeve (6) which is designed to receive the first screw (4), wherein the sliding sleeve (6) is displaceable relative to the frame component (3) and/or to the drive (2),
**characterized in that** the sliding sleeve (6) has an outside diameter which is subject to tolerances and is designed to receive the first screw (4) at the second hole (32) of the holes, wherein a clearance fit (9) is formed on the outside diameter of the sliding sleeve, so that the sliding sleeve is displaceable in the axial direction (X-X) of the first screw, in particular in the second hole (32).

2. Fastening arrangement according to Claim 1, wherein the sliding sleeve (6) has an internal thread (63) for receiving the first screw (4).

3. Fastening arrangement according to Claim 1, further comprising a second screw (5),
- wherein the first screw (4) has a blind hole (42) with an internal thread (43) and the second screw (5) has an external thread (51) which is designed for screw connection to the internal thread (43) of the blind hole (42), or
- wherein the first screw (4) has an external thread and the second screw (5) has a blind hole with an internal thread which is designed to receive the external thread of the first screw (4).

4. Fastening arrangement according to Claim 3, wherein a length of the first screw (4) is greater than a length of the second screw (5).

5. Fastening arrangement according to any of the preceding claims, wherein the sliding sleeve (6) has a main body (60) and an inner flange (61), wherein the main body (60) is made of a different material than the inner flange (61), and wherein the main body (60) has a lower hardness than the inner flange (61).

6. Fastening arrangement according to Claim 5, wherein the sliding sleeve (6) further has an outer flange (62), wherein the outer flange (62) is preferably made of the same material as the inner flange (61).

7. Fastening arrangement according to Claim 6, wherein the outer flange (62) and the inner flange (61) are in the form of perforated discs which are fixedly connected to the main body (60) or which are loosely attached to the main body (60).

8. Fastening arrangement according to any of Claims 5 to 7, wherein the clearance fit (9) is formed on the outer circumference of the main body (60).

9. Fastening arrangement according to any of the preceding claims, further comprising a first bushing (7) and a second bushing (8), wherein the first screw (4) is passed through the first bushing (7) and the second bushing (8).

10. Fastening arrangement according to Claim 9, wherein the first bushing (7) has an inner bushing (70) and an outer bushing (71), and/or
- wherein the second bushing (8) has an inner bushing (80) and an outer bushing (81), and
- wherein the inner bushing (70, 80) is made of a different material than the outer bushing (71, 81).

11. Fastening arrangement according to Claim 10, wherein a hardness of the inner bushing (70, 80) is greater than a hardness of the outer bushing (71, 81).

12. Fastening arrangement according to Claim 10 or 11, wherein the second bushing (8) has an internal thread (82) and the first screw (4) has an external thread (41) which is in engagement with the internal thread (82) of the second bushing (8).

13. Fastening arrangement according to any of Claims 9 to 12, wherein the first bushing (7) and the second bushing (8) each have an outwardly facing flange at one of their ends, wherein the flange is formed in particular by the inner bushing and the outer bushing.

14. Fastening arrangement according to any of the preceding claims, further comprising a damping element (12) made of a steel wire mesh and having a central opening (12a), wherein at least the first screw (4) is passed through the damping element (12).

15. Fastening arrangement according to any of the preceding claims, wherein the sliding sleeve (6) is arranged in the second hole (32).

16. Electric bicycle, comprising an electric drive (2) and a frame component (3) with two mutually opposite holes (31, 32), comprising a fastening arrangement according to any of the preceding claims.

## Revendications

1. Agencement de fixation, configuré pour fixer un entraînement électrique (2) de bicyclette à un composant de cadre (3) de la bicyclette, lequel présente deux trous (31, 32) mutuellement opposés, comprenant :
- une première vis (4) ayant une tête (40) qui est configurée pour être guidée à travers un premier trou (31) des trous ; et
- un manchon coulissant (6) qui est configuré pour recevoir la première vis (4), le manchon coulissant (6) étant déplaçable par rapport au composant de cadre (3) et/ou à l'entraînement (2) ;
**caractérisé en ce que** le manchon coulissant (6) présente un diamètre extérieur soumis à des tolérances et est configuré pour recevoir la première vis (4) au niveau du second trou (32) des trous, un ajustement avec jeu (9) étant formé au niveau du diamètre extérieur du manchon coulissant, de sorte que le manchon coulissant peut être déplacé dans la direction axiale (X-X) de la première vis, en particulier dans le second trou (32).

2. Agencement de fixation selon la revendication 1, dans lequel le manchon coulissant (6) présente un filetage intérieur (63) destiné à recevoir la première vis (4).

3. Agencement de fixation selon la revendication 1, comprenant en outre une seconde vis (5),
- la première vis (4) présentant un trou borgne (42) ayant un filetage intérieur (43) et la seconde vis (5) présentant un filetage extérieur (51) qui est configuré pour un assemblage vissé avec le filetage intérieur (43) du trou borgne (42) ; ou
- la première vis (4) présentant un filetage extérieur et la seconde vis (5) présentant un trou borgne ayant filetage intérieur qui est configuré pour recevoir le filetage extérieur de la première vis (4).

4. Agencement de fixation selon la revendication 3, dans lequel une longueur de la première vis (4) est supérieure à une longueur de la seconde vis (5).

5. Agencement de fixation selon l'une des revendications précédentes, dans lequel le manchon coulissant (6) présente un corps principal (60) et une bride intérieure (61), le corps principal (60) étant fabriqué à partir d'un matériau différent de la bride intérieure (61), et le corps principal (60) présentant une dureté inférieure à celle de la bride intérieure (61).

6. Agencement de fixation selon la revendication 5, dans lequel le manchon coulissant (6) présente en outre une bride extérieure (62), la bride extérieure (62) étant de préférence fabriquée à partir du même matériau que la bride intérieure (61).

7. Agencement de fixation selon la revendication 6, dans lequel la bride extérieure (62) et la bride intérieure (61) sont conçues sous forme de rondelles perforées qui sont fermement reliées au corps principal (60) ou qui sont appliquées de façon lâche sur le corps principal (60).

8. Agencement de fixation selon l'une des revendications 5 à 7, dans lequel l'ajustement avec jeu (9) est formé sur la périphérie extérieure du corps principal (60).

9. Agencement de fixation selon l'une des revendications précédentes, comprenant en outre une première douille (7) et une seconde douille (8), la première vis (4) étant guidée à travers la première douille (7) et la seconde douille (8).

10. Agencement de fixation selon la revendication 9, dans lequel la première douille (7) présente une douille intérieure (70) et une douille extérieure (71), et/ou
- la seconde douille (8) comportant une douille intérieure (80) et une douille extérieure (81), et
- la douille intérieure (70, 80) étant fabriquée à partir d'un matériau différent de celui de la douille extérieure (71, 81).

11. Agencement de fixation selon la revendication 10, dans lequel une dureté de la douille intérieure (70, 80) est supérieure à une dureté de la douille extérieure (71, 81).

12. Agencement de fixation selon la revendication 10 ou 11, dans lequel la seconde douille (8) présente un filetage intérieur (82) et la première vis (4) présente un filetage extérieur (41) qui est en prise avec le filetage intérieur (82) de la seconde douille (8).

13. Agencement de fixation selon l'une des revendications 9 à 12, dans lequel la première douille (7) et la seconde douille (8) présentent respectivement à l'une de leurs extrémités une bride dirigée vers l'extérieur, la bride étant en particulier formée par la douille intérieure et la douille extérieure.

14. Agencement de fixation selon l'une des revendications précédentes, comprenant en outre un élément d'amortissement (12) en treillis de fil d'acier, lequel présente une ouverture centrale (12a), la première vis (4) étant au moins traversée par l'élément d'amortissement (12).

15. Agencement de fixation selon l'une des revendications précédentes, dans lequel le manchon coulissant (6) est agencé dans le second trou (32).

16. Bicyclette électrique, comprenant un entraînement électrique (2) et un composant de cadre (3) ayant deux trous (31, 32) mutuellement opposés, comprenant un agencement de fixation selon l'une des revendications précédentes.
